# EUROPEAN PATENT SPECIFICATION

(11) **EP 4 005 880 B1**
(45) Date of publication and mention of the grant of the patent: **18.10.2023**
(21) Application number: 21208612.8
(22) Date of filing: 16.11.2021
(51) Int. Cl.: B60R 21/207

(54) **SIDE AIRBAG DEVICE AND METHOD OF MANUFACTURING A SIDE AIRBAG DEVICE**
SEITENAIRBAGVORRICHTUNG UND VERFAHREN ZUR HERSTELLUNG EINER SEITENAIRBAGVORRICHTUNG
DISPOSITIF D'AIRBAG LATÉRAL ET PROCÉDÉ DE FABRICATION D'UN DISPOSITIF D'AIRBAG LATÉRAL

(30) Priority: 27.11.2020 JP 2020197272
(43) Date of publication of application: 01.06.2022
(73) Proprietor: Autoliv Development AB, 44783 Vargarda (SE)
(72) Inventor: KOBAYASHI, Yuto, Kasumigaura-shi, 315-8520 (JP); SAKURAI, Tsutomu, Kasumigaura-shi, 315-8520 (JP)
(74) Representative: Müller Verweyen

(56) References cited:
- EP-A1- 2 567 870
- EP-A1- 3 357 764
- EP-A1- 3 549 830
- EP-A1- 3 696 030
- EP-A1- 3 741 629
- WO-A1-2019/193984

## Description

### TECHNICAL FIELD

The present disclosure relates to a vehicle equipped with a side airbag and its method of manufacturing.

### BACKGROUND TECHNOLOGY

In recent years, many vehicles have been equipped with a side airbag device.
The side airbag device disclosed in Patent Document 1 is incorporated into the inner space of the driver seat backrest. The side airbag device is equipped with an inflator and an airbag cushion. The airbag cushion houses the inflator and is arranged outside the backrest skeletal frame in a rolled shape or folded in a bellows shape.

Inflators are activated in the event of a vehicle collision or other emergency. The airbag cushion is expanded and deployed between the driver seat and the passenger seat by the gas injected by the inflator. The expanded and deployed airbag cushion restrains and protects the occupant seated in the driver seat (and the occupant seated in the passenger seat) on the side. Patent Document 2 discloses a vehicle equipped with a side airbag corresponding tc the preamble of claim 1.

### Prior Art Documents

### Patent Documents

Patent Document 1: Japanese Unexamined Patent Application Publication No. 2020-132138 A.
Patent Document 2: European Patent Application Publication EP 3 696 030 A1.

### SUMMARY OF THE INVENTION

### Problem to be Solved by the Invention

An airbag cushion has the size, shape, and other attributes necessary to safely restrain the occupant. Even when there is difficulty fitting an airbag cushion in the limited space outside the skeletal frame, changing the size or shape, and the like of the airbag cushion for the purpose of fitting the airbag cushion in the backrest is not desirable. On the other hand, if priority is given to equipping a side airbag device, the degree of freedom in designing the driver seat will be compromised. Such a problem can also occur when a side airbag device is equipped in a seat other than the driver seat.

An object of the present disclosure is to provide a side airbag device and a method for manufacturing the side airbag device, which can achieve both occupant protection performance and freedom of design of a driver seat. Means for Solving the Problems

The side airbag device according to the present invention is incorporated in an inner space of a backrest of one of two seats lined up in a vehicle in the vehicle width direction, being secured to an inner side of the skeletal frame of the backrest, comprising:
an inflator that injects gas, and
an airbag cushion which expands and deploys, based on the gas injected by the inflator, between the first and the second seats, where
the airbag cushion has a storing part for storing the inflator, a first portion extending in the horizontal direction to one side of the storing part and a second portion extending to the other side thereof, and
at least the storing part and the first portion extending to one side of the airbag cushion before expansion and deployment is arranged on the inside of the skeletal frame.

In the present embodiment, the inflator and at least a portion of the airbag cushion are arranged inside the skeletal frame before expansion and deployment. Therefore, the space inside the skeletal frame can be effectively utilized. Accordingly, the side airbag device can be incorporated into the inner space of the backrest without changing the size or shape of the airbag cushion or the like, even when there is no room in the space outside the skeletal frame. As a result, this enables achieving both occupant protection performance and freedom of seat design.
In the present specification, with reference to the skeletal frame, the side of the occupant seated in said seat is defined as "inner" and the side opposite to the occupant as "outer".
In the following, a case in which a side airbag device is equipped in the driver seat will be illustrated by way of example.

The side airbag device according to the present invention is such that before expansion and deployment, the airbag cushion is continuous to the rear side of the storing part and covers the storing part from the inside of the skeletal frame, and when expanded and deployed, includes a first portion that restrains the passenger seated in the first seat, a second portion which is continuous to the front side of the storing part and arranged on the front side of the skeletal frame, and a third portion which is continuous with the second portion and before expansion and deployment is arranged on the outside of the skeletal frame and capable of contacting the second seat during expansion and deployment.

In the present embodiment, the inflator, the storing part of the airbag cushion before expansion and deployment, and the first portion and the like are arranged inside the skeletal frame. On the other hand, the second portion of the airbag cushion is arranged in front of the skeletal frame, and the third portion of the airbag cushion is arranged outside the skeletal frame. Therefore, the space on both sides of inside and outside of the skeletal frame and the space on the front side of the skeletal frame can be effectively utilized.
In this specification, the forward direction of travel in which the driver seated in the driver seat gazes while driving, or the direction in which the vehicle normally travels, is defined as "front", "forward", or "front side", and the rearward direction in the opposite direction of said direction of travel is defined as "rear", "rearward", or "rear side".

The expanded and deployed first portion can restrain and protect the driver on the passenger side.
Before expansion and deployment of the airbag cushion, the first portion is arranged inside the skeletal frame, so the airbag cushion is close to the driver. Moreover, since the first portion is close to the storing part, expansion and deployment begins at an early stage. As a result of the above, the driver can be restrained earlier during the expansion and deployment of the airbag cushion.
Even after expansion and deployment, the expanded and deployed airbag cushion is interposed between the driver and the skeletal frame as the airbag cushion storing part is arranged inside the skeletal frame. Therefore, the external force applied to the airbag cushion from the driver can be received by the skeletal frame, and the restraint performance of the airbag cushion can be improved.

The second portion is located on the front side of the skeletal frame, enabling easier expansion and deployment to the front side. The second portion expands and deploys earlier due to being closer to the storing part. Before expansion and deployment of the airbag cushion, the third portion is arranged outside the skeletal frame, so the airbag cushion can easily expand and deploy toward the passenger seat. Since the third portion is continuous with the second portion, the expansion of the third portion is accelerated along with the early expansion and deployment of the second portion. As the expanded and deployed third portion contacts the passenger seat, the passenger seat can also receive the external force applied to the airbag cushion from the driver. Therefore, the restraining properties of the airbag cushion can be improved.
The expanded and deployed third portion can also restrain and protect a passenger seated in the passenger seat on the driver seat side.

In the side airbag device of the present embodiment, the first portion is folded in a rolled or bellows shape before expansion and deployment.

In the present embodiment, the first portion is folded into a rolled or bellows shape prior to expansion and deployment of the airbag cushion. The movement of the folded first portion to extend can be used to deploy the first portion in the appropriate direction.

In the side airbag device of the present embodiment, in the state of being incorporated into the inner space, the first portion before expansion and deployment is bent forwardly so as to overlap with the storing part, folded backwardly, and then folded into a rolled shape.

In the present embodiment, prior to the expansion and deployment of the airbag cushion, the first portion is folded in a bellows shape just once to be stacked in the storing part and then folded into a roll. The bellows shape point of the first portion is closer to the storing part than the other points of the first portion, causing earlier expansion. Hence, the bellows shape point of the first portion can push out the rolled-folded point of the first portion at an early stage. In other words, the expansion and deployment of the first portion can be promoted earlier.

In the side airbag device of the present embodiment, the third portion is folded in a rolled or bellows shape before expansion and deployment.

In the present embodiment, the third portion is folded into a rolled or bellows shape prior to expansion and deployment of the airbag cushion. The movement of the folded third portion to extend can be used to deploy the third portion in the appropriate direction.

In the side airbag device of the present embodiment, in the state of being incorporated into the inner space, the third portion before expansion and deployment extends rearwardly from the second portion, is folded forwardly, and then is folded into a rolled shape.

In the present embodiment, before the expansion and deployment of the airbag cushion, the third portion is stacked on the outside of the skeletal frame and is folded in a bellows shape just once, and then folded into a roll. The bellows-folded point of the third portion is closer to the storing part than the other points of the third portion, causing earlier expansion. Hence, the bellows-folded point of the third portion can push out the rolled-folded point of the third portion at an early stage. In other words, the expansion and deployment of the third portion can be promoted earlier.

A method of manufacturing a vehicle equipped with a side airbag is disclosed in claim 6.

### Effect of the Invention

The present disclosure enables both occupant protection performance and freedom of design of the driver seat.

### BRIEF DESCRIPTION OF THE DRAWINGS

FIG. 1 is a plan view schematically illustrating the vehicle cabin of a vehicle provided with the side airbag device according to embodiment 1.
FIG. 2 is a perspective view schematically illustrating the vehicle cabin of the vehicle.
FIG. 3 is a cross-sectional view taken along the line III-III in FIG. 2.
FIG. 4 is a perspective view schematically illustrating the exterior appearance of the airbag cushion.
FIG. 5 is an explanatory diagram illustrating the process of expansion and deployment of the airbag cushion.
FIG. 6 is an explanatory diagram illustrating the process of expansion and deployment of the airbag cushion.
FIG. 7 is an explanatory diagram illustrating the process of expansion and deployment of the airbag cushion.
FIG. 8 is an explanatory diagram illustrating the process of expansion and deployment of the airbag cushion.
FIG. 9 is a flowchart illustrating the manufacturing procedure of the side airbag device.
FIG. 10 is an explanatory diagram illustrating the manufacturing procedure of the side airbag device.
FIG. 11 is an explanatory diagram illustrating the manufacturing procedure of the side airbag device.
FIG. 12 is an explanatory diagram illustrating the manufacturing procedure of the side airbag device.
FIG. 13 is a flowchart illustrating the manufacturing procedure of the side airbag device according to embodiment 2.
FIG. 14 is an explanatory diagram illustrating the manufacturing procedure of the side airbag device.
FIG. 15 is an explanatory diagram illustrating the manufacturing procedure of the side airbag device.
FIG. 16 is a flowchart illustrating the manufacturing procedure of the side airbag device according to embodiment 3.
FIG. 17 is an explanatory diagram illustrating the manufacturing procedure of the side airbag device.
FIG. 18 is an explanatory diagram illustrating the manufacturing procedure of the side airbag device.
FIG. 19 is a cross-sectional view schematically illustrating the structure of the side airbag device according to embodiment 4.
FIG. 20 is a cross-sectional view schematically illustrating the structure of the side airbag device according to embodiment 5.
FIG. 21 is a cross-sectional view schematically illustrating the structure of the side airbag device according to embodiment 6.

### Mode for Carrying Out the Invention

Embodiments of the present disclosure will be described below. In the present document, "left side" and "right side" are defined as "left side" and "right side" as viewed from the driver seated in the driver seat.

### Embodiment 1

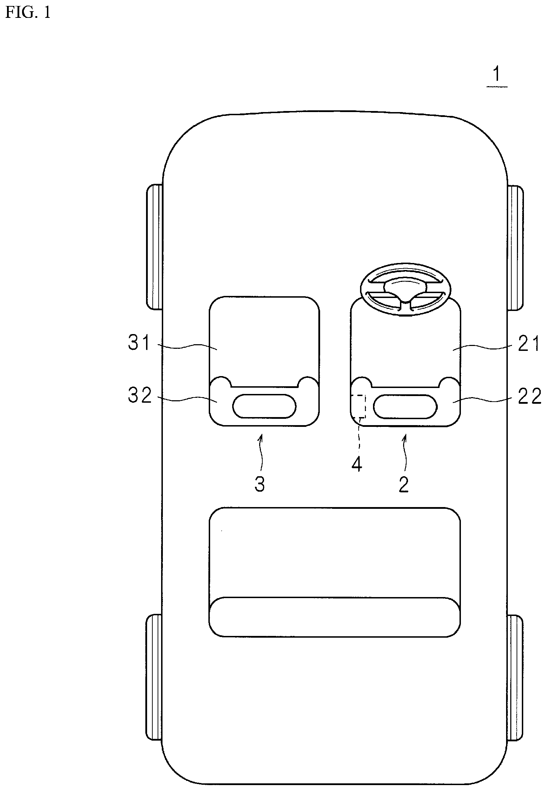

FIG. 1 is a plan view schematically illustrating the vehicle cabin of a vehicle provided with the side airbag device according to embodiment 1. 1 in the diagram is a vehicle, and the vehicle 1 has a driver seat 2 and a passenger seat 3.

The driver seat 2 and the passenger seat 3 are each provided on the floor of the cabin of the vehicle 1. The vehicle 1 is a so-called right-hand drive vehicle, with the driver seat 2 on the right and the passenger seat 3 on the left. The driver seat 2 (and the passenger seat 3) is the first seat (and the second seat) of two seats that are aligned in the width direction of the vehicle 1.

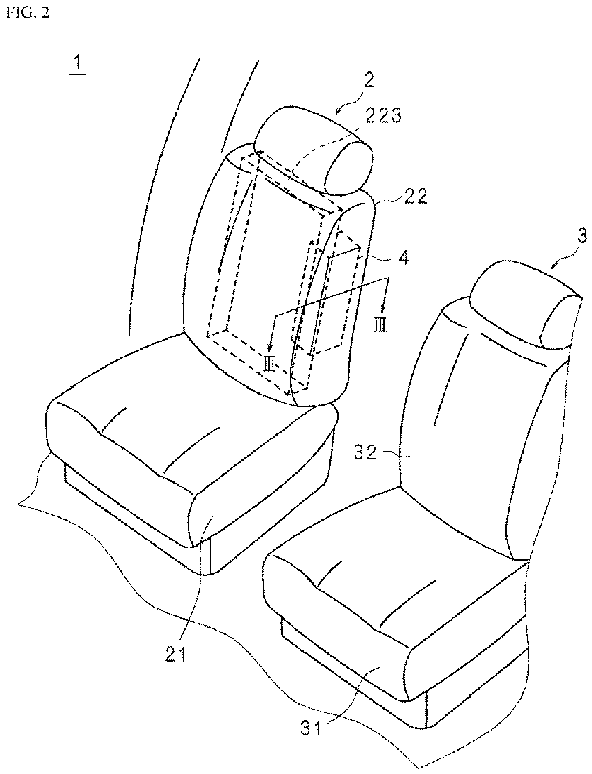

FIG. 2 is a perspective view schematically illustrating the vehicle cabin of the vehicle 1.
As illustrated in FIG. 1 and FIG. 2, the driver seat 2 is provided with a seat cushion 21 and a backrest 22. The driver is seated on the seat cushion 21. The backrest 22 rises upward from the rear of the seat cushion 21 to receive the upper body of the driver seated on the seat cushion 21.
Similarly, the passenger seat 3 has a seat cushion 31 and a backrest 32.

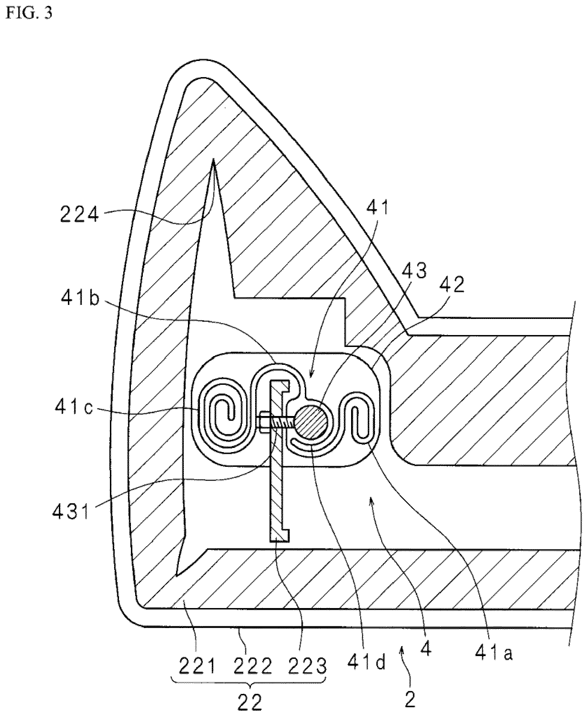

FIG. 3 is a cross-sectional view taken along the line III-III in FIG. 2. FIG. 3 schematically illustrates the vicinity of the left part of the backrest 22 of the driver seat 2. The up, down, left and right directions facing this diagram correspond to the front, rear, left and right directions of the vehicle 1. The backrest 22 is provided with a seat pad 221, a seat cover 222, and a skeletal frame 223 (see FIG. 2).

The seat pad 221 is a cushioning material that receives external forces applied to the backrest 22 from the driver and is made of, for example, polyurethane foam. The outer shape of the seat pad 221 is generally equal to the outer shape of the backrest 22. A space is formed inside the backrest 22, which is surrounded by the seat pad 221.
The outside of the seat pad 221 is covered by a seat cover 222. The seat cover 222 is for example made of cloth or synthetic leather. Although not illustrated, the seat cover 222 is reinforced from the inside of the seat cover 222 by a durable cloth.

As illustrated in FIG. 2, the skeletal frame 223 has a rectangular shape. The skeletal frame 223 has two vertical frames and two horizontal frames. The two vertical frames of the skeletal frame 223 both extend in the vertical direction and sit side by side in the left-right direction. The two horizontal frames of the skeletal frame 223 are bridged between the upper and lower ends of the two vertical frames. FIG. 3 illustrates the vertical frame on the left side of the skeletal frame 223. The skeletal frame 223 is arranged in the inner space of the backrest 22. The skeletal frame 223 retains the seat pad 221 and receives the external force applied to the seat pad 221.

As illustrated in FIG. 3, the left vertical frame of the skeletal frame 223 has an elongated rectangular plate shape, with the long direction being up and down and the short direction being forward and rearward. Ribs protrude rightwardly from each of the front and rear ends of the vertical frame on the left side of the skeletal frame 223.

As illustrated in FIG. 1 to FIG. 3, a side airbag device 4 is incorporated in the inner space of the backrest 22.
As illustrated in FIG. 3, the side airbag device 4 is provided with an airbag cushion 41, a shape retaining member 42, and an inflator 43.
The airbag cushion 41 is a fabric bag body reinforced by braided high-strength fibers, such as nylon fibers, for example. The airbag cushion 41 is folded as described below, and is held in the folded state by the shape retaining member 42.
The shape retaining member 42 is, for example, a fabric case, tape, or the like.

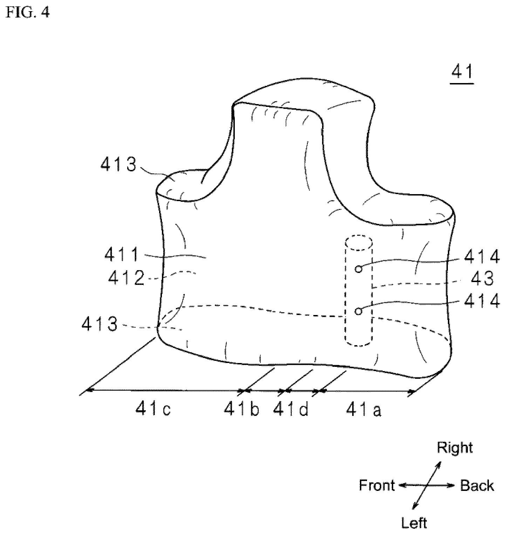

FIG. 4 is a perspective view schematically illustrating the exterior appearance of the airbag cushion 41. FIG. 4 illustrates the airbag cushion 41 during expansion and deployment.
The airbag cushion 41 has two main panels 411 and 412. The main panels 411 and 412 are joined to each other via a sub-panel 413 which serves as a gusset. Both of the main panels 411 and 412 have a convex shape such that a second rectangle protrudes from the center of a first long side in a short direction of a first rectangle that is long in one direction. The airbag cushion 41 is used such that the first rectangle of each of the main panels 411 and 412 is on the bottom and the second rectangle is on the top. That is, the upper portion of the airbag cushion 41 has an upwardly projecting convex portion.

Two through holes 414 are provided in the main panel 411. The two through holes 414 are aligned vertically. As illustrated in FIG. 4, when the long sides of the first rectangle of each of the main panels 411 and 412 extend to the front and back and the main panel 411 is provided to the left of the main panel 412, the through holes 414 are located closer to the rear than the center of the main panel 411 in the front-back direction.
Here, the airbag cushion 41 is conceptually divided into four portions, which are referred to as a first portion 41a, a second portion 41b, a third portion 41c, and a storing part 41d.

The first portion 41a is located at the tail end of the airbag cushion 41. On the front side of the first portion 41a, the storing part 41d, the second portion 41b, and the third portion 41c are continuous in this order. Here, the first portion 41a is a portion extending on one side in the horizontal direction of the storing part 41d, and the second portion 41b and the third portion 41c are portions extending on the other sides in the horizontal direction of the storing part 41d.
The first portion 41a is provided to restrain the driver (an occupant seated in the driver seat 2) from the left side when expanded and deployed. The third portion 41c is provided so as to contact the passenger seat 3 when expanded and deployed, and to restrain the occupant seated in the passenger seat 3 from the right side. The two through holes 414 are located in the portion of the main panel 411 that comprises the storing part 41d.
The boundary between the first portion 41a and the storing part 41d, the boundary between the storing part 41d and the second portion 41b, and the boundary between the second portion 41b and the third portion 41c are not precise in any way.

As illustrated in FIG. 3 and FIG. 4, an inflator 43 is housed in the storing part 41d of the airbag cushion 41. The inflator 43 has a cylindrical shape and incorporates a gas generating agent that explosively generates gas upon ignition. Ignition of the inflator 43 is performed, for example, when a collision of the vehicle 1 is detected. The airbag cushion 41 is used in the axial longitudinal direction facing up and down.

The Inflator 43 is provided with stud bolts 431. The stud bolts 431 protrude leftwardly from the circumferential surface of the inflator 43, for example, by welding one end of the stud bolts 431 to the circumferential surface of the inflator 43. Although not shown, two stud bolts 431 are aligned in the vertical direction. Each stud bolt 431 protrudes outwardly from the airbag cushion 41 by penetrating through a through hole 414 of the airbag cushion 41. An illustration of the stud bolts 431 is omitted in FIG. 4.

As illustrated in FIG. 3, the inflator 43 is arranged inside the skeletal frame 223 of the backrest 22. In further detail, the inflator 43 is arranged near the right side of the left vertical frame of the skeletal frame 223. The inflator 43 is secured to the skeletal frame 223 by the stud bolts 431. The securing position of the inflator 43 to the skeletal frame 223 is desirably in front of the center of the skeletal frame 223 in the front-back direction, especially at the front end.
Since the inflator 43 is stored in the storing part 41d of the airbag cushion 41, the storing part 41d is also arranged inside the skeletal frame 223. The outer surface of the portion that makes up the storing part 41d in the main panel 411 (see FIG. 4) faces the right surface of the skeletal frame 223.

In the airbag cushion 41 before expansion and deployment, the first portion 41a is continuous with the rear side of the storing part 41d, folded to the front side, and in a rolled and folded state, is arranged to cover the storing part 41d from the right side. In other words, the first portion 41a is arranged inside the skeletal frame 223. In plan view, the first portion 41a has a counterclockwise roll shape from the opposite end of the storing part 41d side toward the storing part 41d.

The second portion 41b is continuous with the front side of the storing part 41d and is arranged on the front side of the skeletal frame 223 so as to bypass the ribs on the front side of the skeletal frame 223.
The third portion 41c is continuous with the second portion 41b, and is folded into a rolled shape, and is arranged outside the skeletal frame 223. In plan view, the third portion 41c has a counterclockwise roll shape from the opposite end of the second portion 41b side toward the second portion 41b.

According to the side airbag device 4 as described above, the inflator 43, the first portion 41a, and the storing part 41d of the prior to expansion and deployed airbag cushion 41 are arranged inside the skeletal frame 223. On the other hand, the second portion 41b of the airbag cushion 41 is arranged in front of the skeletal frame 223, and the third portion 41c of the airbag cushion 41 is arranged outside the skeletal frame 223.

Therefore, the space on both sides of the inside and outside of the skeletal frame 223 and the space on the front side of the skeletal frame 223 can be effectively utilized. Accordingly, the side airbag device 4 can be incorporated into the inner space of the backrest 22 without changing the size or shape of the airbag cushion 41 or the like, even when there is no room in the space outside the skeletal frame 223. As a result, this enables achieving both occupant protection performance and freedom of design of the driver seat 2.

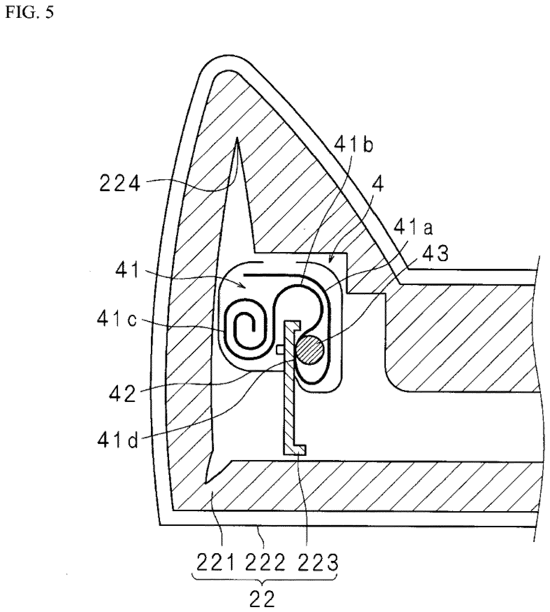

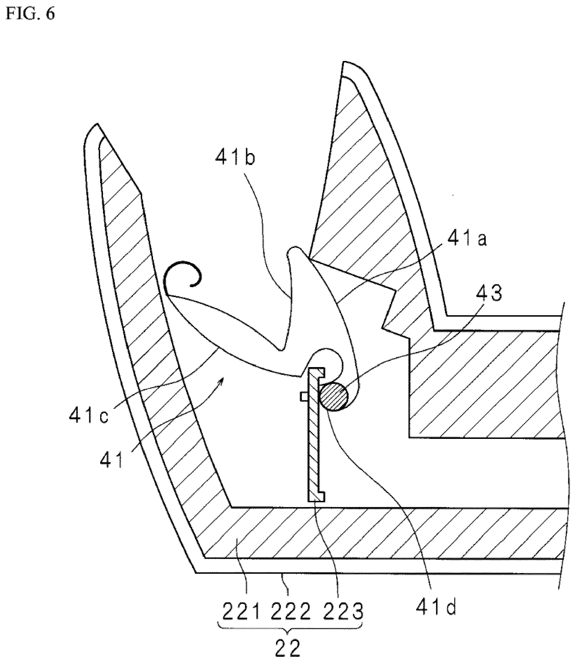

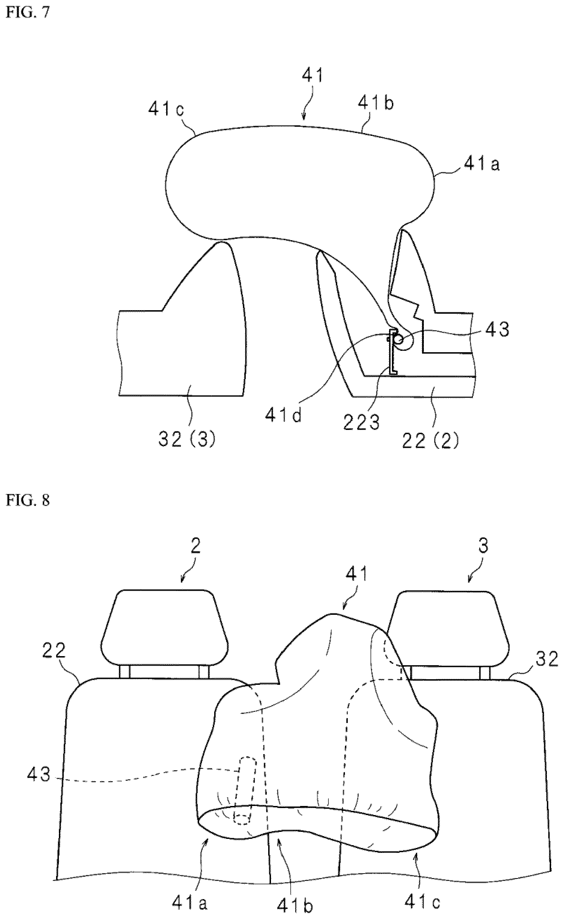

FIG. 5 to FIG. 8 illustrate the process of expansion and deployment of the airbag cushion 41. FIG. 5 and FIG. 6 both schematically illustrate the left side of the backrest 22. FIG. 7 illustrates the vicinity of the space between the backrests 22 and 32. The up, down, left and right directions when facing FIG. 5 to FIG. 7 correspond to the front, rear, left and right directions of the vehicle 1. FIG. 8 schematically illustrates the backrest 22 and 32 in a front view.

The inflator 43 is activated in the event of an emergency such as a collision of the vehicle 1 and injects gas. The gas injected by the inflator 43 causes the airbag cushion 41 to rapidly expand and deploy. The shape retaining member 42, which retains the airbag cushion 41 before expansion and deployment, is provided with a cleavage part (for example, perforation), which is not shown. Hence, the shape retaining member 42 is easily opened by the expansion pressure of the airbag cushion 41 (see FIG. 5). That is, the shape retaining member 42 does not inhibit the expansion and deployment of the airbag cushion 41. An illustration of the shape retaining member 42 in FIG. 6 and FIG. 7 is omitted.

The seat pad 221 of the backrest 22 is provided with a cleavage part 224 (see FIG. 3 and FIG. 5). The cleavage part 224 is, for example, a vertical groove formed on the inner surface of the seat pad 221 and is arranged at the left front part of the seat pad 221. The seat cover 222 has a cleavage part, not shown, corresponding to the arrangement of the cleavage part 224 of the seat pad 221. Therefore, the seat pad 221 and the seat cover 222 are easily opened by the expansion pressure of the airbag cushion 41 (see FIG. 6). An illustration of the seat cover 222 in FIG. 7 is omitted.

As the left front part of the backrest 22 opens to the left and right due to the opening of the seat pad 221 and the seat cover 222, the airbag cushion 41 advances from the inner space of the backrest 22 to the exterior of the backrest 22 and expands and deploys between the driver seat 2 and the passenger seat 3 (see FIG. 7 and FIG. 8). The fully deployed airbag cushion 41 is generally symmetrical about the center of the vehicle 1 in the left-right direction.

The expanded and deployed first portion 41a can restrain and protect the driver from the left side.
Before the expansion and deployment of the airbag cushion 41, the first portion 41a is arranged inside the skeletal frame 223, so the airbag cushion 41 is close to the driver. Moreover, since the first portion 41a is close to the storing part 41d, expansion and deployment begins at an early stage. Accordingly, the driver can be restrained earlier during the expansion and deployment of the airbag cushion 41.

Even after expansion and deployment, the expanded and deployed airbag cushion 41 is interposed between the driver and the skeletal frame 223 because the storing part 41d of the airbag cushion 41 is arranged inside the skeletal frame 223. Therefore, the external force applied to the airbag cushion 41 from the driver can be received by the skeletal frame 223, and the restraint performance of the airbag cushion 41 can be improved.

When the inflator 43 is activated, the first portion 41a expands starting at the side closer to the storing part 41d. The portion of the first portion 41a that expands at the beginning is positioned close to the skeletal frame 223. An external force is applied from the expanded first portion 41a to the skeletal frame 223 via the storing part 41d and the inflator 43, and a reaction force countering this external force is applied from the skeletal frame 223 to the first portion 41a via the storing part 41d and the inflator 43. Since the reaction force from the skeletal frame 223 to the first portion 41a can be obtained at an early stage, the skeletal frame 223 can receive the external force applied to the airbag cushion 41 from the driver during early restraint of the driver.

The first portion 41a is rolled counterclockwise, and the expanding first portion 41a is more likely to unroll and extend forward. The orientation of the roll of the first portion 41a has the effect of pushing the first portion 41a more to the front. Therefore, this is advantageous for early restraint of the driver.

The second portion 41b is located on the front side of the skeletal frame 223, enabling easier expansion and deployment to the front side. The second portion 41b expands and deploys earlier due to being closer to the storing part 41d.
Before the expansion and deployment of the airbag cushion 41, the third portion 41c is arranged outside the skeletal frame 223, so the airbag cushion 41 can easily expand and deploy toward the passenger seat 3. Since the third portion 41c is continuous with the second portion 41b, the expansion of the third portion 41c is accelerated with the early expansion and deployment of the second portion 41b. As the expanded and deployed third portion 41c contacts the passenger seat 3, the passenger seat 3 can also receive the external force applied to the airbag cushion 41 from the driver. Therefore, the restraining nature of the airbag cushion 41 can be improved.

When the inflator 43 is activated, the third portion 41c expands from the side closer to the second portion 41b. The third portion 41c is rolled counterclockwise, and the point of expansion at the beginning of the third portion 41c is close to the skeletal frame 223. Therefore, an external force is applied from the expanded third portion 41c to the skeletal frame 223, and a reaction force countering this external force is applied from the skeletal frame 223 to the third portion 41c.
Since the reaction force from the skeletal frame 223 to the third portion 41c can be obtained at an early stage, the third portion 41c reaches the passenger seat 3 at an early stage, and if an occupant is seated in the passenger seat 3, the occupant can be restrained and protected from the driver seat 2 side at an early stage.

The third portion 41c is rolled counterclockwise, and the expanding third portion 41c is more likely to unroll and extend to the rear. The orientation of the roll of the third portion 41c inhibits the third portion 41c from being pushed too far forward, so that the third portion 41c can easily expand to the left.

After the expansion and deployment of the airbag cushion 41, the gas is gradually discharged from the airbag cushion 41 through the exhaust holes provided in the airbag cushion 41, which are not shown in the diagram.

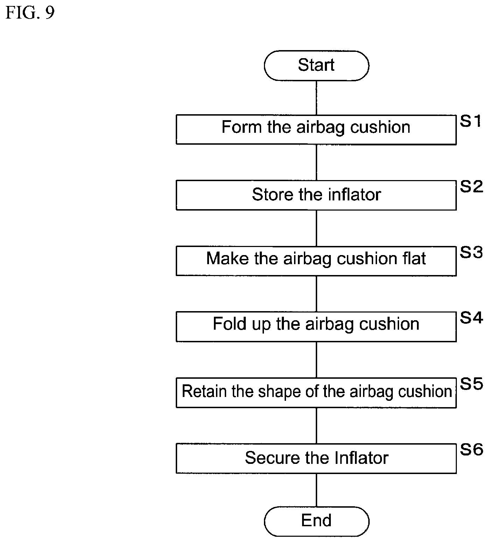

FIG. 9 is a flowchart illustrating the manufacturing procedure of the side airbag device 4.
The manufacturer prepares main panels 411 and 412 and a sub-panel 413 that serves as a gusset, and joins them to form the airbag cushion 41 (S1).
Next, the manufacturer prepares and stores the inflator 43 in the storing part 41d of the airbag cushion 41, with the stud bolts 431 penetrating the through holes 414 of the airbag cushion 41 (S2; See FIG. 4).

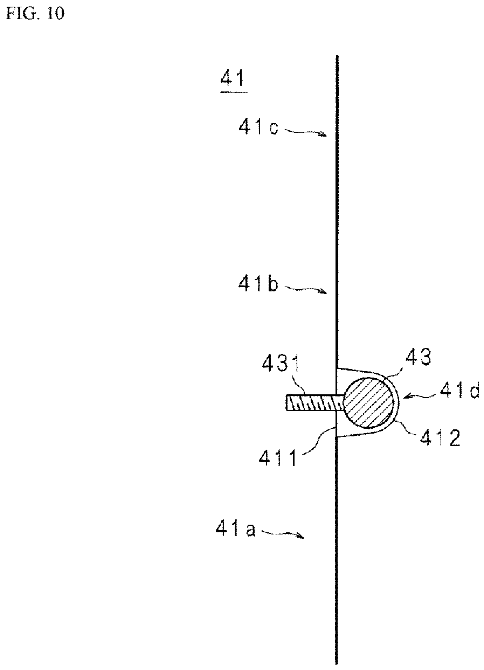

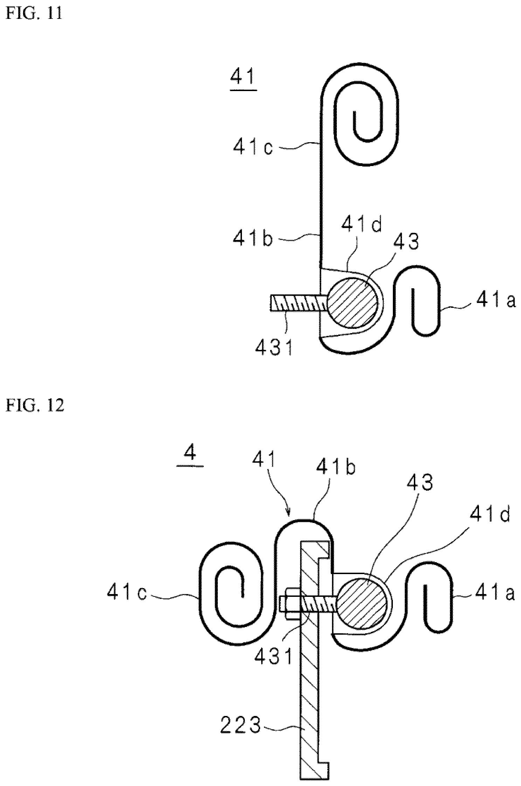

FIG. 10 and FIG. 11 illustrate a manufacturing procedure for the side airbag device 4. The up, down, left and right directions when facing FIG. 10 and FIG. 11 correspond to the front, rear, left and right directions of the vehicle 1.
After completion of step S2 shown in FIG. 9, the manufacturer shapes the airbag cushion 41 into a rectangular flat shape by causing the inner surfaces of the main panels 411 and 412 to contact each other (S3; See FIG. 10). In step S3, the sub-panel 413 is inserted between the main panels 411 and 412, and the convex portion at the top of the airbag cushion 41 is bent to the outer side of the main panel 411 (or main panel 412). The sub-panel 413 may be bent to the outer side of the main panel 411 (or the main panel 412). A convex portion at the top of the airbag cushion 41 may be inserted between the main panels 411 and 412.

As illustrated in FIG. 10, in the airbag cushion 41, which has a rectangular flat shape, the rear side of the storing part 41d is short and the front side of the storing part 41d is long. The rear side of the storing part 41d is the first portion 41a. The second portion 41b and the third portion 41c are in front of the storing part 41d.

After completion of step S3 illustrated in FIG. 9, the manufacturer folds the airbag cushion 41 (S4). In step S4, the manufacturer folds at least the first portion 41a and the third portion 41c, each into a roll. Furthermore, the manufacturer folds the first portion 41a forwardly at the boundary portion between the first portion 41a and the storing part 41d (see FIG. 11). Thereafter, the manufacturer retains the airbag cushion 41 with the shape retaining member 42 (S5) and secures the inflator 43 to the skeletal frame 223 so that the first portion 41a and the storing part 41d are arranged inside the skeletal frame 223 (S6; See FIG. 12). For the sake of clarity of the diagrams, an illustration of the shape retaining member 42 is omitted in FIG. 12.

The timing of folding the airbag cushion 41 at the boundary portion between the second portion 41b and the storing part 41d and at the boundary portion between the third portion 41c and the second portion 41b is not limited. These folds may be made in step S4, between step S4 and step S5, between step S5 and step S6, or after step S6.
The bending at the boundary portion between the first portion 41a and the storing part 41d should be performed in step S4, but is not limited thereto.

The vehicle 1 may be a left-hand drive vehicle. The side airbag device 4 in the case of a left-hand drive vehicle has a symmetrical configuration to the side airbag device 4 of the present embodiment.
The side airbag device 4 is most suitably equipped in the backrest 22 of the driver seat 2, but is not limited thereto. The side airbag device 4 may be provided in the backrest 32 of the passenger seat 3, or in the backrest of one of the two rear seats aligned in the width direction of the vehicle 1.

Before expansion and deployment, the first portion 41a and the storing part 41d of the airbag cushion 41 must be arranged inside the skeletal frame 223. However, the first portion 41a is not limited to a configuration in which the storing part 41d is covered from the right side.
On the other hand, the arrangement of the second portion 41b and the third portion 41c of the airbag cushion 41 is not limited to the front side and the outside side of the skeletal frame 223. For example, some or all of the second portion 41b and the third portion 41c may be arranged in front of the skeletal frame 223, or may be arranged inside the skeletal frame 223.
The shape of the airbag cushion 41 is not limited. For example, the airbag cushion 41 may be rectangular in shape.
The shape retaining member 42 is not limited to a fabric case or tape. The shape retaining member 42 may be made of synthetic resin or a sheet.

Next, embodiments 2 and 3 are described. The side airbag device 4 of embodiments 2 and 3 is similar to the side airbag device 4 of embodiment 1, except for the manufacturing procedure of the side airbag device 4. In the following, differences from embodiment 1 will be described, and other components identical to those of embodiment 1 will be marked with the same sign and the descriptions thereof will be omitted.

### Embodiment 2

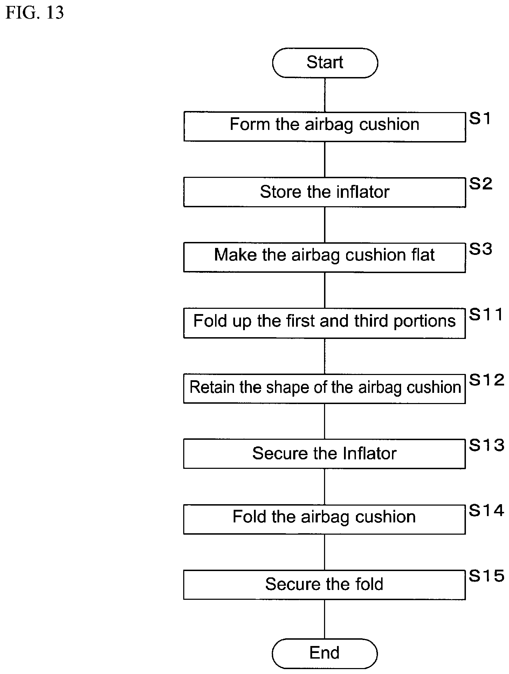

FIG. 13 is a flowchart illustrating the manufacturing procedure of the side airbag device 4 according to embodiment 2. Steps S1 to S3 illustrated in FIG. 13 are the same as steps S1 to S3 illustrated in FIG. 9 of embodiment 1.

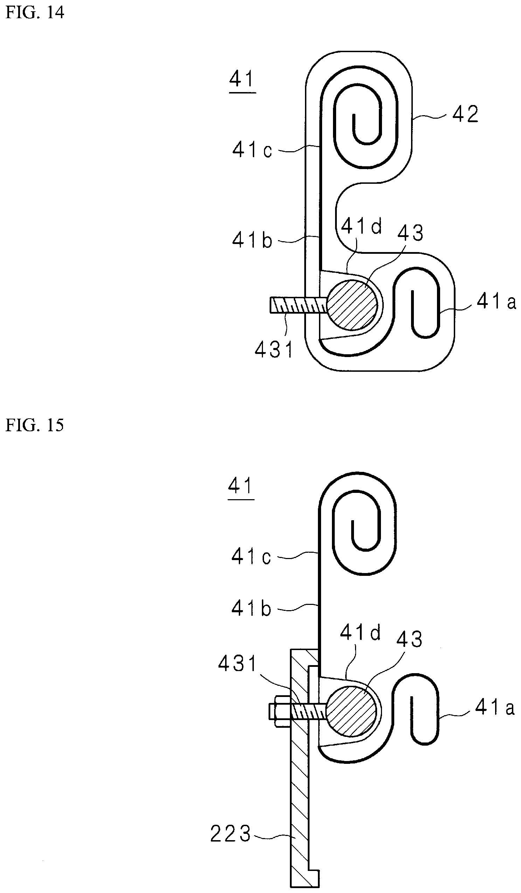

FIG. 14 and FIG. 15 illustrate a manufacturing procedure for the side airbag device 4. The up, down, left and right directions in FIG. 14 and FIG. 15 correspond to the front, rear, left and right directions of the vehicle 1.

After completion of step S3 illustrated in FIG. 13 (see FIG. 10), the manufacturer folds the first portion 41a and the third portion 41c (S11; see FIG. 11). In step S11, the manufacturer folds the first portion 41a into a roll, with the roll being counterclockwise from the rear end of the first portion 41a toward the storing part 41d. Furthermore, the manufacturer bends the first portion 41a frontwardly at the boundary portion between the first portion 41a and the storing part 41d, so that the first portion 41a covers the storing part 41d from the right side. The manufacturer also folds the third portion 41c into a roll, so that the roll is counterclockwise from the front end of the third portion 41c toward the second portion 41b.

Next, the manufacturer retains the airbag cushion 41 with the shape retaining member 42 (S12; See FIG. 14). The shape retaining member 42 used in step S12 is, for example, case shaped and houses the airbag cushion 41. The shape retaining member 42 has a material or structure that can be bent at the boundary portion between the second portion 41b and the storing part 41d and the boundary portion between the third portion 41c and the second portion 41b, respectively, in step S14 described below.

Next, the manufacturer distributes the first portion 41a and the storing part 41d inside the skeletal frame 223 so that the second portion 41b and the third portion 41c are positioned in front of the storing part 41d, and secures the inflator 43 to the skeletal frame 223 (S13; see FIG. 15). In step S13, the manufacturer inserts the stud bolts 431 into the through holes (not shown) in the skeletal frame 223, and secures the inflator 43 to the skeletal frame 223 using the stud bolts 431 and nuts. For the sake of clarity of the diagrams, an illustration of the shape retaining member 42 is omitted in FIG. 15.

Furthermore, the manufacturer bends the airbag cushion 41 so as to sandwich the skeletal frame 223 from the front side with the airbag cushion 41 (S14; see FIG. 12). In step S14, the manufacturer bends the second portion 41b to the left at the boundary portion between the second portion 41b and the storing part 41d. Furthermore, the manufacturer bends the third portion 41c rearwardly at the boundary portion between the third portion 41c and the second portion 41b. As a result, the second portion 41b is arranged on the front side of the skeletal frame 223, and the third portion 41c is arranged on the outside of the skeletal frame 223.

After completion of step S14 illustrated in FIG. 13, the manufacturer secures the bending of the airbag cushion 41 performed in step S14 (S15). In step S15, the manufacturer retains the airbag cushion 41 so that the second portion 41b is positioned in front of the skeletal frame 223 and the third portion 41c is positioned outside the skeletal frame 223. For this purpose, the manufacturer secures the encased retaining member 42 used in step S12 to the skeletal frame 223, for example, with a shape retaining member 42.

After manufacturing the side airbag device 4 as described above, the manufacturer covers the skeletal frame 223 with the seat pad 221 and further covers the seat pad 221 with the seat cover 222 to form the backrest 22 (see FIG. 3).
The manufacturing procedure of embodiment 2 is an example of a manufacturing procedure in which the airbag cushion 41 is temporarily retained, then the airbag cushion 41 is bent, and lastly, fully retained in a completed state.

### Embodiment 3

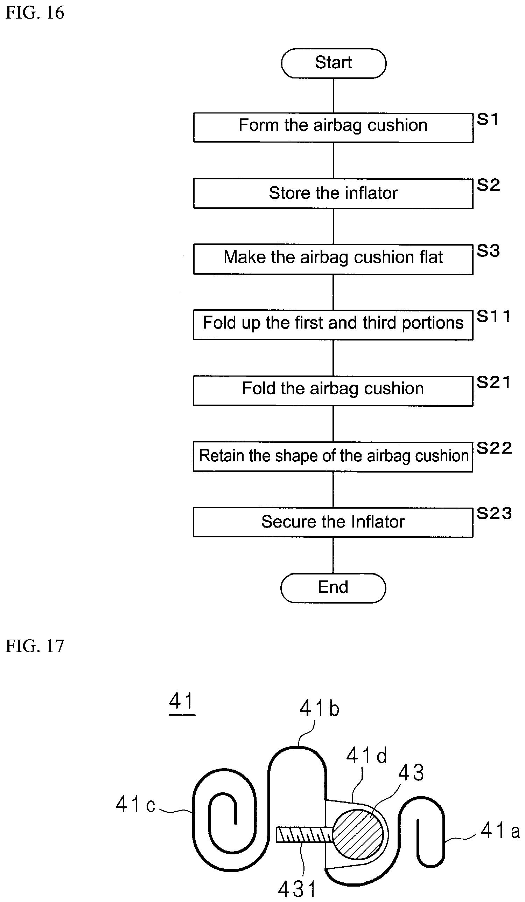

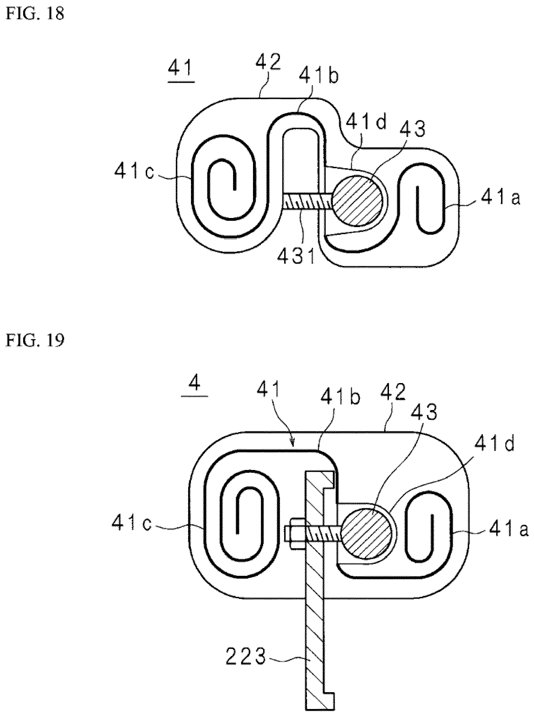

FIG. 16 is a flowchart showing the manufacturing procedure of the side airbag device 4 according to embodiment 3. Steps S1 to S3 and S11 illustrated in FIG. 16 are the same as steps S1 to S3 and S11 illustrated in FIG. 13 of embodiment 2. FIG. 17 and FIG. 18 illustrate a manufacturing procedure for the side airbag device 4. The up, down, left and right directions of FIG. 17 and FIG. 18 correspond to the front, rear, left and right directions of the vehicle 1.

After completion of step S11 illustrated in FIG. 16 (see FIG. 11), the manufacturer folds the airbag cushion 41 (S21; see FIG. 17). In step S21, the manufacturer folds the second portion 41b leftwardly at the boundary portion between the second portion 41b and the storing part 41d, and folds the third portion 41c rearwardly at the boundary portion between the third portion 41c and the second portion 41b. As a result, the first portion 41a and the storing part 41d are opposite the third portion 41c in the crosswise direction.

After completion of step S21 illustrated in FIG. 16, the manufacturer retains the airbag cushion 41 with a shape retaining member 42 (S22; see FIG. 18). The shape retaining member 42 used in step S22 does not necessary need to be a material or structure that can be bent at the boundary portion of the second portion 41b and the storing part 41d and the boundary portion of the third portion 41c and the second portion 41b.

Thereafter, the manufacturer secures the inflator 43 to the skeletal frame 223 by sandwiching the skeletal frame 223 with the airbag cushion 41 from the front side (S23; see FIG. 12). In step S23, the manufacturer arranges the first portion 41a and the storing part 41d on the inside of the skeletal frame 223, the second portion 41b on the front of the skeletal frame 223, and the third portion 41c on the outside of the skeletal frame 223. In addition, the manufacturer also inserts the stud bolts 431 into the through holes (not shown) in the skeletal frame 223 and secures the inflator 43 to the skeletal frame 223 using the stud bolts 431 and nuts.

After manufacturing the side airbag device 4 as described above, the manufacturer covers the skeletal frame 223 with the seat pad 221 and further covers the seat pad 221 with the seat cover 222 to form the backrest 22 (see FIG. 3).
The manufacturing procedure of embodiment 3 is an example of a manufacturing procedure in which all folding and bending of the airbag cushion 41 is completed before the airbag cushion 41 is retained.

Next, embodiments 4 to 6 are described. The side airbag device 4 of embodiments 4 to 6 is similar to the side airbag device 4 of embodiment 1, except for the configuration of the first portion 41a and the third portion 41c. In the following, differences from embodiment 1 will be described, and other components identical to those of embodiment 1 will be marked with the same sign and the descriptions thereof will be omitted.

### Embodiment 4

FIG. 19 is a cross-sectional view schematically illustrating the structure of the side airbag device 4 according to embodiment 4. The up, down, left and right directions facing this diagram correspond to the front, rear, left and right directions of the vehicle 1.

The first portion 41a of the airbag cushion 41 before expansion and deployment is, in plan view, in a clockwise roll shape from the opposite end of the storing part 41d side toward the storing part 41d. Similarly, the third portion 41c of the airbag cushion 41 before expansion and deployment is, in plan view, a clockwise roll from the opposite end of the second portion 41b side toward the second portion 41b.

When the inflator 43 is activated, the early-expanding portion of the first portion 41a is located far from the skeletal frame 223. Similarly, the early-expanding portion of the third portion 41c is located far from the skeletal frame 223. Therefore, since the expanded first portion 41a and the third portion 41c each tend to expand and deploy so as to move further away from the skeletal frame 223, the shape retaining member 42 and the backrest 22 can be cleaved at an early stage. Accordingly, the airbag cushion 41 can advance from the inner space of the backrest 22 to the exterior of the backrest 22 at an early stage.

The expanding first portion 41a tends to unroll and extend to the rear side. The orientation of the roll of the first portion 41a prevents the first portion 41a from being pushed too far forward. On the other hand, the third portion 41c, which expands, tends to unroll and extend to the front side. The orientation of the roll of the third portion 41c favors advancement of the third portion 41c to the front side.

The side airbag device 4 of the present embodiment is manufactured in the same manner as the side airbag device 4 of embodiments 1 to 3. However, at step S4 illustrated in FIG. 9 or step S11 illustrated in FIG. 13 (or FIG. 16), the manufacturer folds the first portion 41a and the third portion 41c each into a clockwise roll.

### Embodiment 5

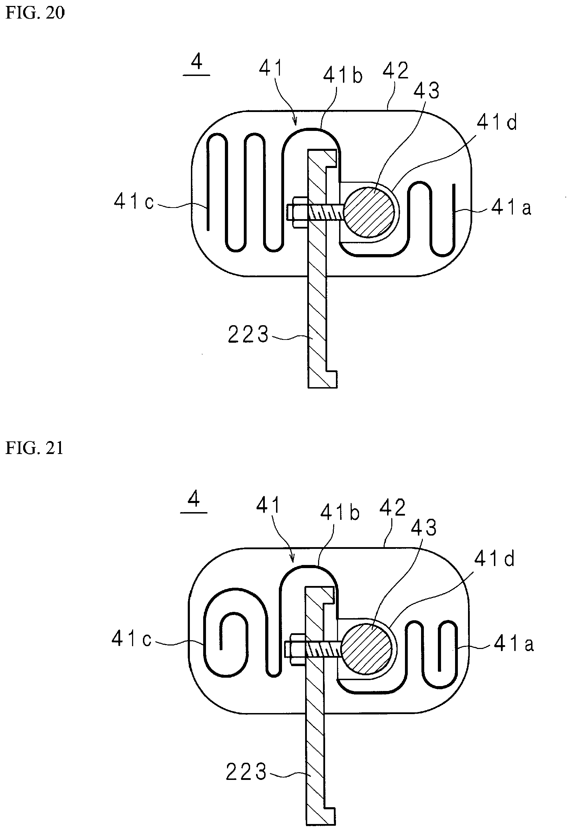

FIG. 20 is a cross-sectional view schematically illustrating the structure of the side airbag device 4 according to embodiment 5. The up, down, left and right directions facing this diagram correspond to the front, rear, left and right directions of the vehicle 1.

The first portion 41a of the airbag cushion 41 before expansion and deployment is stacked on the right side of the storing part 41d and folded in a bellows shape. Similarly, the third portion 41c of the airbag cushion 41 before expansion and deployment is stacked on the left side of the skeletal frame 223 and folded in a bellows shape.

When the inflator 43 is actuated, the initially expanded portions of the respective first portion 41a and third portion 41c are located close to the skeletal frame 223. Therefore, as in the case of embodiment 1, a reaction force from the skeletal frame 223 to the first portion 41a and the third portion 41c each can be obtained at an early stage.
The expanding first portion 41a readily unravels the bellows fold and extends to the right side. On the other hand, the third portion 41c, which expands, tends to undo the bellows fold and extend to the left side. That is, the expanded first portion 41a and the third portion 41c each easily expand and deploy so as to move away from the skeletal frame 223. Therefore, as in the case of embodiment 2, the shape retaining member 42 and the backrest 22 can be cleaved at an early stage.

The side airbag device 4 of the present embodiment is manufactured in the same manner as the side airbag device 4 of embodiments 1 to 3. However, in step S4 illustrated in FIG. 9 or step S11 illustrated in FIG. 13 (or FIG. 16), the manufacturer folds the first portion 41a and the third portion 41c each into a bellows shape.

### Embodiment 6

FIG. 21 is a cross-sectional view schematically illustrating the structure of the side airbag device 4 according to embodiment 6. The up, down, left and right directions facing this diagram correspond to the front, rear, left and right directions of the vehicle 1.

The first portion 41a of the airbag cushion 41 before expansion and deployment is folded forwardly to overlap the storing part 41d, folded backwardly, and then folded into a roll. In a manner of speaking, the first portion 41a is folded in a bellows shape only once being stacked in the storing part 41d and then folded in a counterclockwise roll. On the other hand, the third portion 41c of the airbag cushion 41 before expansion and deployment extends rearwardly from the second portion 41b, is folded forwardly again, and then is folded into a rolled shape. In a manner of speaking, the third portion 41c is folded in a bellows shape only once, stacked on the outer face of the skeletal frame 223, and then folded in a counterclockwise roll.

The bellows shape point of the first portion 41a is closer to the storing part 41d than the other points of the first portion 41a, causing earlier expansion. Hence, the bellows-folded portion of the first portion 41a can push out the rolled-folded portion of the first portion 41a at an early stage. In other words, the expansion and deployment of the first portion 41a can be promoted at an early stage.
Similarly, the bellows-folded point of the third portion 41c is closer to the storing part 41d than the other points of the third portion 41c, causing earlier expansion. Hence, the bellows shape point of the third portion 41c can push out the rolled-folded portion of the third portion 41c at an early stage. In other words, the expansion and deployment of the third portion 41c can be promoted at an early stage.

The side airbag device 4 of the present embodiment is manufactured in the same manner as the side airbag device 4 of embodiments 1 to 3. However, at step S4 illustrated in FIG. 9 or step S11 illustrated in FIG. 13 (or FIG. 16), the manufacturer folds the first portion 41a and the third portion 41c each into a bellows shape and then folds them into a roll shape. Alternatively, the manufacturer folds the first portion 41a and the third portion 41c each into a roll and then folds them into a bellows shape.

For the airbag cushion 41, there are four types of folding methods of the first portion 41a, as described in Embodiments 1 and 4 to 6. Similarly, there are four different ways to fold the third portion 41c. These can be combined arbitrarily, depending on the desired expansion and deployment behavior of the airbag cushion 41.

For example, a first of the first portion 41a and the third portion 41c may be folded in a counterclockwise roll shape as in embodiment 1, and a second of the first portion 41a and the third portion 41c may be folded in a clockwise roll shape as in embodiment 4. Alternatively, a first of the first portion 41a and the third portion 41c of the airbag cushion 41 may be folded in a rolled shape as in embodiments 1 and 4, and a second of the first portion 41a and the third portion 41c may be folded in a bellows shape as in embodiment 5. Alternatively, a first of the first portion 41a and the third portion 41c of the airbag cushion 41 may be folded in a rolled or bellows manner as in embodiments 1, 4, and 5, and a second of the first portion 41a and the third portion 41c may be folded in a bellows and rolled manner as in embodiment 6.

The airbag cushion 41 is not limited to a configuration in which the first portion 41a and the third portion 41c are each folded. For example, the airbag cushion 41 may include a first portion 41a or a third portion 41c that is compressed. Compression of the first portion 41a or the third portion 41c is performed at step S4 illustrated in FIG. 9 or at step S11 illustrated in FIG. 13 (or FIG. 16).

The embodiments presently disclosed are to be considered as examples for all points, and are not restrictive. Note that the reference numbers appended in the claims are for understanding of the claims.

### Description of Codes

1: Vehicle
2: Driver seat (a first of two seats)
22: Backrest
223: Skeletal frame
3: Passenger seat (second seat)
4: Side airbag device
41: Airbag cushion
41a: First portion (portion extending in first direction)
41b: Second portion (portion extending in second direction)
41c: Third portion (portion extending in third direction)
41d: Storing part
43: Inflator

## Claims

1. A vehicle comprising two seats (2,3) lined up in the vehicle width direction and a side airbag device (4) incorporated in an inner space of a backrest (22) of the first seat (2), secured to an inner side of a skeletal frame (223) of the backrest (22), comprising:
an inflator (43) that injects gas, and
an airbag cushion (41) which expands and deploys, based on the gas injected by the inflator (43), between the first seat (2) and the second seat (3), wherein
the airbag cushion (41) has a storing part (41d) for storing the inflator (43), a first portion (41a) extending to one side in the horizontal direction of the storing part (41d), and second and third portions (41b, 41c) that extend to the other sides thereof, such that
at least the storing part (41d) and the first portion (41a) extending to one of the sides of the airbag cushion (41) before expansion and deployment are arranged on the inside of the skeletal frame (223), **characterized in that**. the airbag cushion (41), being continuous to the backside of the storing part (41d) prior to expansion and deployment and arranged so as to cover the storing part (41d) on the inside of the skeletal frame (223), comprising:
a first portion (41a) that restrains an occupant seated in the first (2) upon expansion and deployment;
a second portion (41b) continuous to the front of the storing part (41d) and arranged at the front of the skeletal frame (223); and
a third portion (41c) continuous to the second portion (41b), arranged on the outside of the skeletal frame (223) before expansion and deployment and can come into contact with the second seat (3) during expansion and deployment.

2. The vehicle according to claim 1, wherein the first portion (41a) before expansion and deployment is folded in a rolled or bellows shape.

3. The vehicle according to claim 2, wherein the first portion (41a) before expansion and deployment, in a state incorporated in the inner space, is folded forwardly to overlap the storing part (41d), and folded backwardly and then folded into a roll.

4. The vehicle according to any one of claims 1 to 3, wherein the third portion (41c) before expansion and deployment is folded in a rolled or bellows shape.

5. The vehicle according to claim 4, wherein the third portion (41c) before expansion and deployment, in a state incorporated in the inner space, extends rearwardly from the second portion (41b) and then folded forwardly and folded into a roll.

6. A method for manufacturing a vehicle comprising two seats (2,3) lined up in the vehicle width direction and a side airbag device (4) incorporated in an inner space of a backrest (22) of the first seat (2), comprising:
an inflator (43) that injects gas, and
an airbag cushion (41) which expands and deploys, based on the gas injected by the inflator (43), between the first seat (2) and a second seat (3), wherein
the airbag cushion (41) has a storing part (41d) for storing the inflator (43), a first portion (41a) extending to one side in the horizontal direction of the storing part (41d), and second and third portions (41b, 41c) that extend to the other sides thereof,
the inflator (43) is stored in the storing part (41d),
at least the first portion (41a) extending to one side of the airbag cushion (41) and the storing part (41d) are arranged are arranged on the inside of the skeletal frame (223) of the backrest (22), and
the inflator (43) is secured to the inside of the skeletal frame (223), chracterized in that,
the airbag cushion (41), being continuous to the backside of the storing part (41d) prior to expansion and deployment and arranged so as to cover the storing part (41d) on the inside of the skeletal frame (223), comprising:
a first portion (41a) that restrains an occupant seated in the first (2) upon expansion and deployment;
a second portion (41b) continuous to the front of the storing part (41d) and arranged at the front of the skeletal frame (223); and
a third portion (41c) continuous to the second portion (41b), arranged on the outside of the skeletal frame (223) before expansion and deployment and can come into contact with the second seat (3) during expansion and deployment.

## Patentansprüche

1. Fahrzeug, umfassend zwei Sitze (2,3), die in Fahrzeugbreitenrichtung arrangiert sind, und eine Seitenairbagvorrichtung (4), die in einen Innenraum einer Rückenlehne (22) des ersten Sitzes (2) integriert ist, die an einer Innenseite eines Skelettrahmens (223) der Rückenlehne (22) befestigt ist, umfassend:
einen Gasgenerator (43), der Gas einspritzt, und
ein Airbagkissen (41), das sich basierend auf dem durch den Gasgenerator (43) eingespritzten Gas zwischen dem ersten Sitz (2) und dem zweiten Sitz (3) ausdehnt und entfaltet, wobei
das Airbagkissen (41) ein Lagerteil (41d) zum Lagern des Gasgenerators (43), einen ersten Abschnitt (41a), der sich zu einer Seite in der horizontalen Richtung des Lagerteils (41d) erstreckt, und einen zweiten und einen dritten Abschnitt (41b, 41c) aufweist, die sich zu den anderen Seiten davon derart erstrecken, dass
mindestens das Lagerteil (41 d) und der erste Abschnitt (41a), der sich zu einer der Seiten des Airbagkissens (41) erstreckt, vor der Ausdehnung und dem Entfalten auf der Innenseite des Skelettrahmens (223) angeordnet sind, **dadurch gekennzeichnet, dass** das Airbagkissen (41) vor der Ausdehnung und der Entfaltung durchgehend zu der Rückseite des Lagerteils (41d) ist, und angeordnet ist, um das Lagerteil (41d) auf der Innenseite des Skelettrahmens (223) abzudecken, umfassend:
einen ersten Abschnitt (41a), der einen Insassen, der in dem ersten (2) sitzt, bei Ausdehnung und Entfaltung zurückhält;
einen zweiten Abschnitt (41b), der zu der Vorderseite des Lagerteils (41d) durchgehend und an der Vorderseite des Skelettrahmens (223) angeordnet ist; und
einen dritten Abschnitt (41c), der zu dem zweiten Abschnitt (41b) durchgehend ist, der vor der Ausdehnung und Entfaltung an der Außenseite des Skelettrahmens (223) angeordnet ist und während der Ausdehnung und Entfaltung mit dem zweiten Sitz (3) in Kontakt kommen kann.

2. Fahrzeug nach Anspruch 1, wobei der erste Abschnitt (41a) vor der Ausdehnung und Entfaltung in einer gerollten oder balgförmigen Form gefaltet ist.

3. Fahrzeug nach Anspruch 2, wobei der erste Abschnitt (41a) vor der Ausdehnung und Entfaltung in einem in dem Innenraum integrierten Zustand, nach vorne gefaltet ist, um das Lagerteil (41d) zu überlappen, und zurückgefaltet und dann in eine Rolle gefaltet wird.

4. Fahrzeug nach einem der Ansprüche 1 bis 3, wobei der dritte Abschnitt (41c) vor der Ausdehnung und Entfaltung in einer gerollten oder balgförmigen Form gefaltet ist.

5. Fahrzeug nach Anspruch 4, wobei sich der dritte Abschnitt (41c) vor der Ausdehnung und Entfaltung in einem in dem Innenraum integrierten Zustand, sich von dem zweiten Abschnitt (41b) nach hinten erstreckt und dann nach vorne gefaltet und in eine Rolle gefaltet wird.

6. Verfahren zum Herstellen eines Fahrzeugs, umfassend zwei Sitze (2,3), die in Fahrzeugbreitenrichtung arrangiert sind, und eine Seitenairbagvorrichtung (4), die in einen Innenraum einer Rückenlehne (22) des ersten Sitzes (2) integriert ist, umfassend:
einen Gasgenerator (43), der Gas einspritzt, und
ein Airbagkissen (41), das sich basierend auf dem durch den Gasgenerator (43) eingespritzten Gas zwischen dem ersten Sitz (2) und einem zweiten Sitz (3) ausdehnt und entfaltet, wobei
das Airbagkissen (41) ein Lagerteil (41 d) zum Lagern des Gasgenerators (43), einen erster Abschnitt (41a), der sich zu einer Seite in der horizontalen Richtung des Lagerteils (41d) erstreckt, und einen zweiten und einen dritten Abschnitt (41b, 41c) aufweist, die sich zu den anderen Seiten davon erstrecken,
der Gasgenerator (43) in dem Lagerteil (41d) gelagert ist,
mindestens der erste Abschnitt (41a), der sich zu einer Seite des Airbagkissens (41) erstreckt, und das Lagerteil (41d) auf der Innenseite des Skelettrahmens (223) der Rückenlehne (22) angeordnet sind, und
der Gasgenerator (43) an der Innenseite des Skelettrahmens (223) befestigt ist, **dadurch gekennzeichnet, dass** das Airbagkissen (41) vor der Ausdehnung und der Entfaltung durchgehend zu der Rückseite des Lagerteils (41d) ist, und angeordnet ist, um das Lagerteil (41d) auf der Innenseite des Skelettrahmens (223) abzudecken, umfassend:
einen ersten Abschnitt (41a), der einen Insassen, der in dem ersten (2) sitzt, bei Ausdehnung und Entfaltung zurückhält;
einen zweiten Abschnitt (41b), der zu der Vorderseite des Lagerteils (41d) durchgehend und an der Vorderseite des Skelettrahmens (223) angeordnet ist; und
einen dritten Abschnitt (41c), der zu dem zweiten Abschnitt (41b) durchgehend ist, der vor der Ausdehnung und Entfaltung an der Außenseite des Skelettrahmens (223) angeordnet ist und während der Ausdehnung und Entfaltung mit dem zweiten Sitz (3) in Kontakt kommen kann.

## Revendications

1. Véhicule comprenant deux sièges (2, 3) alignés dans le sens de la largeur du véhicule et un dispositif de coussin de sécurité gonflable latéral (4) incorporé dans un espace intérieur d'un dossier (22) du premier siège (2), fixé à un côté intérieur d'une armature squelette (223) du dossier (22), comprenant :
un gonfleur (43) qui injecte du gaz, et
un coussin de coussin de sécurité gonflable (41) qui s'ouvre et se déploie, sur la base du gaz injecté par le gonfleur (43), entre le premier siège (2) et le second siège (3), dans lequel
le coussin de coussin de sécurité gonflable (41) a une partie de stockage (41d) pour stocker le gonfleur (43), une première partie (41a) s'étendant sur un côté dans la direction horizontale de la partie de stockage (41d), et de deuxième et troisième parties (41b, 41c) qui s'étendent sur les autres côtés de celle-ci, de sorte que
au moins la partie de stockage (41d) et la première partie (41a) s'étendant sur l'un des côtés du coussin de coussin de sécurité gonflable (41) avant l'ouverture et le déploiement sont agencées à l'intérieur de l'armature squelette (223), **caractérisé en ce que** le coussin de coussin de sécurité gonflable (41), qui est continu au côté arrière de la partie de stockage (41d) avant l'ouverture et le déploiement et agencé de manière à recouvrir la partie de stockage (41d) à l'intérieur de l'armature squelette (223), comprenant :
une première partie (41a) qui retient un occupant assis dans le premier siège (2) lors de l'ouverture et du déploiement ;
une deuxième partie (41b) continue à l'avant de la partie de stockage (41d) et agencée à l'avant de l'armature squelette (223) ; et
une troisième partie (41c) continue à la deuxième partie (41b), agencée à l'extérieur de l'armature squelette (223) avant l'ouverture et le déploiement et peut entrer en contact avec le second siège (3) pendant l'ouverture et le déploiement.

2. Véhicule selon la revendication 1, dans lequel la première partie (41a) avant l'ouverture et le déploiement est pliée dans une forme roulée ou de soufflet.

3. Véhicule selon la revendication 2, dans lequel la première partie (41a) avant l'ouverture et le déploiement, dans un état incorporé dans l'espace intérieur, est pliée vers l'avant pour recouvrir la partie de stockage (41d), et pliée vers l'arrière puis repliée en rouleau.

4. Véhicule selon l'une quelconque des revendications 1 à 3, dans lequel la troisième partie (41c) avant l'ouverture et le déploiement est pliée dans une forme roulée ou de soufflet.

5. Véhicule selon la revendication 4, dans lequel la troisième partie (41c) avant l'ouverture et le déploiement, dans un état incorporé dans l'espace intérieur, s'étend vers l'arrière à partir de la deuxième partie (41b) puis est repliée vers l'avant et repliée en rouleau.

6. Procédé de fabrication d'un véhicule comprenant deux sièges (2, 3) alignés dans le sens de la largeur du véhicule et un dispositif de coussin de sécurité gonflable latéral (4) incorporé dans un espace intérieur d'un dossier (22) du premier siège (2), comprenant :
un gonfleur (43) qui injecte du gaz, et
un coussin de coussin de sécurité gonflable (41) qui s'ouvre et se déploie, sur la base du gaz injecté par le gonfleur (43), entre le premier siège (2) et un second siège (3), dans lequel
le coussin de coussin de sécurité gonflable (41) a une partie de stockage (41d) pour stocker le gonfleur (43), une première partie (41a) s'étendant sur un côté dans la direction horizontale de la partie de stockage (41d), et de deuxième et troisième parties (41b, 41c) qui s'étendent sur les autres côtés de celle-ci,
le gonfleur (43) est stocké dans la partie de stockage (41d),
au moins la première partie (41a) s'étendant sur un côté du coussin de coussin de sécurité gonflable (41) et la partie de stockage (41d) sont agencées à l'intérieur de l'armature squelette (223) du dossier (22), et
le gonfleur (43) est fixé à l'intérieur de l'armature squelette (223), **caractérisé en ce que** le coussin de coussin de sécurité gonflable (41), qui est continu au côté arrière de la partie de stockage (41d) avant l'ouverture et le déploiement et agencé de manière à recouvrir la partie de stockage (41d) à l'intérieur de l'armature squelette (223), comprenant :
une première partie (41a) qui retient un occupant assis dans le premier siège (2) lors de l'ouverture et du déploiement ;
une deuxième partie (41b) continue à l'avant de la partie de stockage (41d) et agencée à l'avant de l'armature squelette (223) ; et
une troisième partie (41c) continue à la deuxième partie (41b), agencée à l'extérieur de l'armature squelette (223) avant l'ouverture et le déploiement et peut entrer en contact avec le second siège (3) pendant l'ouverture et le déploiement.
